(19)

Europäisches
Patentamt
European
Patent Office
Office européen
des brevets

(11) **EP 2 796 285 A1**

(12) **EUROPEAN PATENT APPLICATION**

(43) Date of publication:
**29.10.2014 Bulletin 2014/44**

(21) Application number: **14165785.8**

(22) Date of filing: **24.04.2014**

(51) Int Cl.:
*B32B 5/18* (2006.01)   *B32B 27/06* (2006.01)
*B32B 27/10* (2006.01)   *B32B 27/12* (2006.01)
*C08F 2/04* (2006.01)   *C08F 2/22* (2006.01)
*C09J 7/02* (2006.01)   *C09J 133/10* (2006.01)
*C09J 133/08* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.04.2013 JP 2013091915**

(71) Applicant: **NITTO DENKO CORPORATION
Ibaraki-shi, Osaka 567-8680 (JP)**

(72) Inventors:
• **Higuchi, Naoaki**
  **Ibaraki-shi, Osaka 567-8680 (JP)**
• **Niwa, Masahito**
  **Ibaraki-shi, Osaka 567-8680 (JP)**
• **Yamanaka, Eiji**
  **Ibaraki-shi, Osaka 567-8680 (JP)**

(74) Representative: **Grünecker, Kinkeldey,
Stockmair & Schwanhäusser
Leopoldstrasse 4
80802 München (DE)**

(54) **Heat-foamable, removable pressure-sensitive adhesive sheet**

(57)   The present invention provides a PSA sheet such that when adhered to an adherend having an uneven surface, it requires no force to be applied continuously for a certain period of time, yet is capable of combining excellent adhesion under normal conditions and easy removability relative to the adherend having the uneven surface. The PSA sheet according to the present invention comprises a porous material layer and a heat-foaming agent-containing PSA layer, wherein the heat-foaming agent-containing PSA layer comprises an acrylic polymer, and the acrylic polymer is obtained by solution polymerization or emulsion polymerization.

EP 2 796 285 A1

**Description**

[Technical Field]

The present invention relates to a heat-foamable, removable pressure-sensitive adhesive (PSA) sheet.

[Background Art]

Conventionally, acrylic foam PSA tapes (acrylic PSA tapes comprising fine particles in substrates and/or PSA layers) are used for purposes requiring strong adhesion and shear strength at ambient temperature, for example, attaching of components in various fields such as automobiles, mechanical parts, electric appliances, building materials, etc.
While conventional acrylic foam PSA tapes provide adhesion with improved reliability by the high adhesive strength, the high adhesive strength has in turn made separation and disassembling of joints difficult. Focused on these issues, some PSA tapes have been lately known to combine adhesiveness under normal conditions and easy removability relative to adherends having uneven surfaces (e.g. see Japanese Patent Application Publication No. 2009-120807).

[Summary of Invention]

[Technical Problem]

With the constitution mentioned above, however, when adhered to an adherend having an uneven surface, due to the poorer tack to uneven surfaces, some force needs to be applied continuously for a certain period of time.
An objective of the present invention is thus to provide a PSA sheet such that when adhered to an adherend having an uneven surface, it requires no force to be applied continuously for a certain period of time, yet is capable of combining excellent adhesion under normal conditions and easy removability relative to the adherend having the uneven surface.

[Solution to Problem]

As with the PSA sheet in Japanese Patent Application Publication No. 2009-120807, a viscoelastic body containing bubbles and fine particles needs to have a certain thickness; and therefore, it is usually prepared by UV polymerization. Accordingly, in view of the productivity, a PSA layer placed atop the viscoelastic body is usually prepared by UV polymerization as well.
As a result of earnest investigations conducted to solve the problem, the present inventors found that on the contrary to the conventional common knowledge, by preparing the PSA layer not by UV polymerization, but by solution polymerization or emulsion polymerization, a PSA sheet was made such that when adhered to an adherend having an uneven surface, it required no force applied continuously for a certain period of time, yet provided both excellent adhesion under normal conditions and easy removability relative to the adherend having the uneven surface; and completed the present invention.
In other words, the PSA sheet according to the present invention comprises a porous material layer, and a PSA layer comprising a heat-foaming agent. Herein, the heat-foaming agent-containing PSA layer comprises an acrylic polymer, and the acrylic polymer is obtained by solution polymerization or emulsion polymerization.
In a preferable embodiment of the art disclosed herein, the porous material layer has a thickness of 100 $\mu$m to 10000 $\mu$m. In another preferable embodiment, the porous material layer includes bubbles at 3 to 99 % by volume of the total volume of the porous material layer.

[Advantageous Effects of Invention]

When adhered to an adherend having an uneven surface, the PSA sheet according to the present invention requires no force to be applied continuously for a certain period of time to combine excellent adhesion to the adherend having the uneven surface under normal conditions with easy removability.

[Description of Embodiments]

The PSA sheet disclosed herein comprises a porous material layer and a heat-foaming agent-containing PSA layer.
In the present description, "A to B" that indicates a range means A or greater, but B or less. Various physical properties cited in the present description refer to values measured by the methods described in the worked examples described later unless otherwise informed.

The term "primary component" in the present description refers to a component contained at the highest ratio by weight in the composition, which usually means 50 to 100 % by weight. The term "PSA sheet" in this description encompasses tape-form constitutions, that is, "PSA tapes".

In the present description, the weight average molecular weight (Mw) refers to a weight average molecular weight based on standard polystyrene, which can be obtained by gel permeation chromatography (GPC) measurement taken on a soluble portion (or a sol fraction) obtained by tetrahydrofuran (THF) extraction of a measurement sample, unless otherwise indicated.

The sol fraction refers to a value that can be determined by the following method unless otherwise indicated.

Approximately 0.1 g of an acrylic polymer (mass: $W_{c1}$ mg) as a measurement sample is wrapped into a pouch with a porous polytetrafluoroethylene resin membrane (mass: $W_{c2}$ mg) having an average pore diameter of 0.2 $\mu$m, and the opening is tied with twine (mass: $W_{c3}$ mg). This pouch is placed in a screw vial of volume 50 mL (one screw vial is used for each pouch), and the screw vial is filled with ethyl acetate. After this is left at room temperature (typically 23 °C) for 7 days, the pouch is taken out and dried at 130 °C for two hours, and the mass ($W_{c4}$ mg) of the pouch is measured. The gel fraction (Gc) of the acrylic polymer is determined by substituting the respective values into the following equation:

$$Gc \ (\%) = [(W_{c4} - W_{c2} - W_{c3})/W_{c1}] \times 100$$

(I) Heat-Foaming Agent-Containing PSA Layer

The heat-foaming agent-containing PSA layer comprises an acrylic polymer and a heat-foaming agent. The heat-foaming agent-containing PSA layer can be formed, for instance, from a PSA composition comprising an acrylic polymer and a heat-foaming agent. Hereinafter, the acrylic polymer contained in the heat-foaming agent-containing PSA layer may be referred to as an acrylic polymer (A).

The thickness of the heat-foaming agent-containing PSA layer is suitably selected according to the intended purpose or the degree of reduction in the adhesive strength caused by heating. To maintain the surface smoothness, the thickness is preferably equal to or larger than the maximum particle diameter of the heat-foaming agent (especially, thermally expandable microspheres), for example, 1 $\mu$m to 300 $\mu$m, preferably 3 $\mu$m to 200 $\mu$m, or more preferably about 10 $\mu$m to 100 $\mu$m. The heat-foaming agent-containing PSA layer having a thickness within these ranges tends to have adhesive strength sufficient to hold an adherend. The heat-foaming agent-containing PSA layer may have a single layer form or a layered form.

The heat-foaming agent-containing PSA layer preferably has a gel fraction of 30 to 70 %.

<Acrylic Polymer (A)>

The acrylic polymer (A) is obtained by solution polymerization or emulsion polymerization. The acrylic polymer (A) content in the heat-foaming agent-containing PSA layer is, for instance, preferably 30 to 90 % by weight, or more preferably at 50 to 80 % by weight.

While not particularly limited, the acrylic polymer (A) obtained by solution polymerization has a weight average molecular weight of preferably $30 \times 10^4$ to $130 \times 10^4$, more preferably $35 \times 10^4$ to $85 \times 10^4$, or even more preferably $40 \times 10^4$ to $80 \times 10^4$. On the other hand, although not particularly limited, the acrylic polymer (A) obtained by emulsion polymerization has a weight average molecular weight of preferably $25 \times 10^4$ to $130 \times 10^4$, or more preferably $30 \times 10^4$ to $100 \times 10^4$.

(Alkyl (Meth)acrylate)

The acrylic polymer (A) can be obtained by polymerizing a monomer composition comprising an alkyl (meth)acrylate as a primary component.

The alkyl (meth)acrylate is not particularly limited, with examples including compounds represented by the following general formula (1).

[Chem 1]

$$H_2C=CR^1COOR^2 \qquad (1)$$

(in general formula (1), $R^1$ is a hydrogen atom or a methyl group and $R^2$ is a linear or branched alkyl group having 1 to 18 carbon atoms.)

Specific examples of $R^2$ in general formula (1) include methyl group, ethyl group, propyl group, isopropyl group, butyl group, isobutyl group, sec-butyl group, t-butyl group, pentyl group, neopentyl group, isoamyl group, hexyl group, heptyl group, octyl group, 2-ethylhexyl group, isooctyl group, nonyl group, isononyl group, decyl group, isodecyl group, undecyl group, dodecyl group, tridecyl group, tetradecyl group, pentadecyl group, hexadecyl group, heptadecyl group, octadecyl group, and so on.

Specific examples of the alkyl (meth)acrylate represented by general formula (1) include methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, and so on. These alkyl (meth)acrylates can be used singly or in combination of two or more kinds.

The number of carbon atoms in the alkyl group of the alkyl (meth)acrylate is preferably 2 to 18, or more preferably 4 to 12.

The amount of the aforementioned alkyl (meth)acrylate added can be, for example, 60 to 99.9 parts by weight, or preferably 70 to 99 parts by weight relative to 100 parts by weight of a total amount of the monomer composition.

(Polar Group-Containing Monomer)

It is preferable that the monomer composition comprises a polar group-containing monomer besides the alkyl (meth)acrylate.

Specific examples of the polar group-containing monomer include unsaturated carboxylic acids such as (meth)acrylic acid, itaconic acid, maleic acid, fumaric acid, crotonic acid, cinnamic acid, etc.; monoesters of unsaturated dicarboxylic acids such as monomethyl itaconate, monobutyl itaconate, 2-acryloyloxyethyl phthalate, etc.; monoesters of unsaturated tricarboxylic acids such as 2-methacryloyloxyethyl trimellitate, 2-methacryloyloxyethyl pyromellitate, etc.; carboxyalkyl acrylates such as carboxyethyl acrylates ($\beta$-carboxyethyl acrylate, etc.), carboxypentyl acrylates, etc.; acrylic acid dimer (e.g. trade name "ARONIX M-5600" available from Toagosei Co., Ltd.), acrylic acid trimer; carboxyl group-containing unsaturated monomers including anhydrides of unsaturated dicarboxylic acids such as itaconic acid anhydride, maleic acid anhydride, fumaric acid anhydride, etc., and the like; hydroxyl group-containing unsaturated monomers such as 2-hydroxyethyl acrylate, 2-hydroxypropyl acrylate, 2-hydroxybutyl acrylate, etc.; epoxy group-containing unsaturated monomers such as glycidyl (meth)acrylate, methylglycidyl (meth)acrylate, etc.; amino group-containing unsaturated monomers such as aminoethyl (meth)acrylate, N,N-dimethylaminoethyl (meth)acrylate, t-butylaminoethyl (meth)acrylate, etc.; amide group-containing unsaturated monomers such as (meth)acrylamide, N,N-dimethyl (meth)acrylamide, N,N-diethyl (meth)acrylamide, N-isopropyl (meth)acrylamide, N-butyl (meth)acrylamide, N-methoxymethyl (meth)acrylamide, N-methylol (meth)acrylamide, N-methylolpropane (meth)acrylamide, etc.; cyano group-containing unsaturated monomers such as (meth)acrylonitrile, etc.; maleimide group-containing monomers such as N-cyclohexylmaleimide, N-isopropylmaleimide, N-laurylmaleimide, N-phenylmaleimide, etc.; itaconimide-group-containing monomers such as N-methylitaconimide, N-ethylitaconimide, N-butylitaconimide, N-octylitaconimide, N-2-ethylhexylitaconimide, N-cyclohexylitaconimide, N-lautylitaconimide, etc.; succinimide group-containing monomers such as N-(meth)acryloyloxymethylene succinimide, N-(meth)acryloyl-6-oxyhexamethylene succinimide, N-(meth)acryloyl-8-oxyoctamethylene succinimide, etc.; vinyl group-containing heterocyclic compounds such as N-vinylpyrrolidone, N-(1-methylvinyl) pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, (meth)acryloylmorpholine, etc.; sulfonate group-containing unsaturated monomers such as styrene sulfonate, allylsulfonic acid, 2-(meth)acrylamide-2-methyl-propanesulfonic acid, (meth)acrylamide propanesulfonic acid, sulfopropyl (meth)acrylate, (meth)acryloxynaphthalene sulfonic acid, etc.; phosphate group-containing unsaturated monomers such as 2-hydroxyethylacryloyl phosphate, etc.; functional monomers such as 2-methacryloyloxyethyl isocyanate, etc.; and the like. Among these, one species may be used solely, or two or more species may be used together.

In the monomer composition, the polar group-containing monomer content is usually above zero part by weight, but 50 parts by weight or less, preferably 0.5 to 30 parts by weight, or more preferably 1 to 20 parts by weight relative to 100 parts by weight of a total amount of the monomer composition. With the polar group-containing monomer content being within these ranges in the monomer composition, a PSA having excellent heat resistance, solvent resistance and anchoring ability, etc., can be formed.

(Other Co-Polymerizable Monomers)

The monomer composition may comprise other co-polimerizable monomer(s) besides the alkyl (meth)acrylate and the polar group-containing monomer.

The co-polymerizable monomers include vinyl ester group-containing monomers such as vinyl acetate, etc.; aromatic unsaturated monomers such as styrene, vinyl toluene, etc.; (meth)acrylic alicyclic hydrocarbon ester monomers such as cyclopentyl di(meth)acrylate, isobornyl (meth)acrylate, etc.; alkoxy-group-containing unsaturated monomers such as methoxyethyl (meth)acrylate, ethoxyethyl (meth)acrylate, etc.; olefinic monomers such as ethylene, propylene, isoprene, butadiene, isobutylene, etc.; vinyl-ether-based monomers such as vinyl ether, etc.; halogen-atom-containing unsaturated monomers such as vinyl chloride, etc.; and others including acrylic-acid-ester-based monomers containing a heterocyclic ring or a halogen atom such as tetrahydrofurfuryl (meth)acrylate, fluoro(meth)acrylates, and so on.

(Polyfunctional Monomer)

Further examples of co-polymerizable monomers include polyfunctional monomers. Examples of polyfunctional monomers include polyfunctional (meth)acrylates, divinylbenzene and the like. Examples of polyfunctional (meth)acrylates include trimethylolpropane tri(meth)acrylate, tetramethylolmethane tetraacrylate, pentaerythritol di(meth)acrylate, pentaerythritol tri(meth)acrylate, pentaerythritol tetra(meth)acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth)acrylate, polyethylene glycol di(meth)acrylate, hexanediol di(meth)acrylate, (poly)ethylene glycol di(meth)acrylate, polypropylene glycol di(meth)acrylate, neopentyl glycol di(meth)acrylate, tetramethylolmethane tri(meth)acrylate, allyl (meth)acrylate, vinyl (meth)acrylate, epoxy acrylate, polyester acrylate, urethane acrylate, reactive hyperbranched polymer having multiple terminal (meth)acryloyl groups (e.g. trade names "CN2300", "CN2301", "CN2320" (available from Sartomer Company, Inc.), etc.) and the like. Polyfunctional monomers can be used singly or in combination of two or more species.

For example, of 100 parts by weight of all monomers constituting the acrylic polymer (A), the polyfunctional monomer is 0.001 to 5 parts by weight, preferably 0.001 to 3 parts by weight, or more preferably 0.01 to 2 parts by weight.

(Silyl Group-Containing Vinyl Monomer)

Examples of the co-polymerizable monomer include silyl group-containing monomers. In particular, when preparing the acrylic polymer (A) by emulsion polymerization, a silyl group-containing vinyl monomer is preferably included as a co-polymerizable monomer.

Examples of silyl group-containing monomers include silicone-based (meth)acrylate monomers, silicone-based vinyl monomers and the like.

Examples of silicone-based (meth)acrylate monomers include (meth)acryloxyalkyl-trialkoxysilanes such as (meth)acryloxymethyl-trimethoxysilane, (meth)acryloxymethyl-triethoxysilane, 2-(meth)acryloxyethyl-trimethoxysilane, 2-(meth)acryloxyethyl-triethoxysilane, 3-(meth)acryloxypropyl-trimethoxysilane, 3-(meth)acryloxypropyl-triethoxysilane, 3-(meth)acryloxypropyl-tripropoxysilane, 3-(meth)acryloxypropyl-triisopropoxysilane, 3-(meth)acryloxypropyl-tributoxysilane, etc.; (meth)acryloxyalkyl alkyl-dialkoxysilanes such as (meth)acryloxymethyl-methyldimethoxysilane, (meth)acryloxymethyl-methyldiethoxysilane, 2-(meth)acryloxyethyl-methyldimethoxysilane, 2-(meth)acryloxyethyl-methyldiethoxysilane, 3-(meth)acryloxypropyl-methyldimethoxysilane, 3-(meth)acryloxypropyl-methyldiethoxysilane, 3-(meth)acryloxypropyl-methyldipropoxysilane, 3-(meth)acryloxypropyl-methyldiisopropoxysilane, 3-(meth)acryloxypropyl-methyldibutoxysilane, 3-(meth)acryloxypropyl-ethyldimethoxysilane, 3-(meth)acryloxypropyl-ethyldiethoxysilane, 3-(meth)acryloxypropyl-ethyldipropoxysilane, 3-(meth)acryloxypropyl-ethyldiisopropoxysilane, 3-(meth)acryloxypropyl-ethyldibutoxysilane, 3-(meth)acryloxypropyl-propyldimethoxysilane, 3-(meth)acryloxypropyl-propyldiethoxysilane, etc.; and their corresponding (meth)acryloxyalkyl-dialkyl(mono)alkoxysilanes; and so on.

Examples of silicone-based vinyl monomers include vinyltrialkoxysilanes such as vinyltrimethoxysilane, vinyltriethoxysilane, vinyltripropoxysilane, vinyltriisopropoxysilane, vinyltributoxysilane, etc., and their corresponding vinylalkyldialkoxysilanes and vinyldialkylalkoxysilanes; vinylalkyltrialkoxysilanes such as vinylmethyltrimethoxysilane, vinylmethyltriethoxysilane, β-vinylethyltrimethoxysilane, β-vinylethyltriethoxysilane, γ-vinylpropyltrimethoxysilane, γ-vinylpropyltriethoxysilane, γ-vinylpropyltripropoxysilane, γ-vinylpropyltriisopropoxysilane, γ-vinylpropyltributoxysilane, etc., and their corresponding (vinylalkyl)alkyldialkoxysilanes and (vinylalkyl)dialkyl(mono)alkoxysilanes; and so on.

By using a silyl group-containing vinyl monomer as a co-polymerizable monomer, silyl groups are included in the polymer chains, and crosslinking structures can be formed via reactions among the silyl groups.

These co-polymerizable monomers can be used singly or in combination. The amount of the co-polymerizable monomer used in the monomer composition is, for example, preferably in a range greater than zero part by weight up to 40 parts by weight relative to 100 parts by weight of the total monomer composition, or more preferably greater than zero part by weight up to 30 parts by weight.

The acrylic polymer (A) can be obtained by solution polymerization or emulsion polymerization of the monomer composition, and can be produced under known polymerization conditions.

<Crosslinking Agent>

It is preferable that the PSA composition further comprises a crosslinking agent. As the crosslinking agent, a compound having two or more functional groups that are reactive with the polar group in the polar group-containing monomer is preferable, with examples including isocyanate-based crosslinking agents, epoxy-based crosslinking agents, oxazoline-based crosslinking agents, aziridine-based crosslinking agents, metal chelate-based crosslinking agents, carbodiimide-based crosslinking agents and the like. The crosslinking agents are not particularly limited, and an oil-soluble or water-soluble crosslinking agent is used.

When an epoxy-based crosslinking agent is used, crosslinking structures can be formed, for instance, with inclusion of a carboxyl group, a hydroxyl group such as a phenol-based hydroxyl group or the like, an amino group, or an acid anhydride group, etc., as the polar group in the acrylic polymer (A). The epoxy-based crosslinking agent is not particularly limited, with examples including compounds having two or more epoxy groups per molecule such as bisphenol A-epichlorohydrin-type epoxy-based resins, ethylene diglycidyl ether, polyethylene glycol diglycidyl ether, glycerin diglycidyl ether, glycerin triglycidyl ether, 1,6-hexanediol diglycidyl ether, trimethylolpropane triglycidyl ether, diglycidyl aniline, diamineglycidylamine, N,N,N',N'-tetraglycidyl-m-xylylenediamine, 1,3-bis(N,N-diglycidylaminomethyl)cyclohexane, and so on.

When an isocyanate-based crosslinking agent is used, crosslinking structures can be formed, for instance, with inclusion of a hydroxyl group, an amino group, or a carboxyl group, etc., as the polar group in the acrylic polymer (A). The isocyanate group-containing compound is not particularly limited, with examples including diphenylmethane diisocyanate (MDI), tolylene diisocyanate (TDI), hexamethylene diisocyanate (HDI), isophorone diisocyanate (IPDI), trimethylhexamethylene diisocyanate (TMDI), xylene diisocyanate (XDI), naphthalene diisocyanate (NDI), trimethylolpropane (TMP)-adduct TDI, TMP-adduct IPDI, and so on.

The oxazoline-based crosslinking agent is not particularly limited, with examples including the crosslinking agents exemplified in Japanese Patent Application Publication No. 2009-001673, specifically including a compound comprising a main chain formed with an acrylic structure or a styrene structure with the main chain having an oxazoline group in its side chain, and preferably including oxazoline group-containing acrylic polymers comprising a main chain formed with an acrylic structure with the main chain having an oxazoline group in its side chain.

When an aziridine-based crosslinking agent is used, crosslinking structures can be formed, for instance, with inclusion of a carboxyl group, a glycidyl group, or an isocyanate group, etc., as the polar group in the acrylic polymer (A). The aziridine-based crosslinking agent is not particularly limited, with examples including trimethylolpropane tris[3-(1-aziridinyl)propionate and trimethylolpropane tris[3-(1-(2-methyl)aziridinylpropionate)].

When a metal chelate-based crosslinking agent is used, crosslinking structures can be formed, for instance, with inclusion of a carboxyl group, a hydroxyl group, a glycidyl group, or an isocyanate group, etc., as the polar group in the acrylic polymers. The metal chelate-based crosslinking agent is not particularly limited, with examples including the crosslinking agents exemplified in Japanese Patent Application Publication No. 2007-063536, including specifically, for instance, aluminum chelate-based compounds, titanium chelate-based compounds, zinc chelate-based compounds, zirconium chelate-based compounds, iron chelate-based compounds, cobalt chelate-based compounds, nickel chelate-based compounds, tin chelate-based compounds, manganese chelate-based compounds, chromium chelate-based compounds, and the like.

When a carbodiimide-based crosslinking agent is used, crosslinking structures can be formed with inclusion of a carboxyl group, an amino group, a hydroxyl group, etc., as the polar group in the acrylic polymer (A).

The carbodiimide-based crosslinking agent should comprise two or more carbodiimide groups in its molecule. The carbodiimide group represents a group (-N=C=NH, -N=C=N-) resulting from subtraction of one or two hydrogen atoms from a carbodiimide (HN=C=NH). Examples include compounds represented by $R^3$-N=C=N-$R^4$-N=C=N-$R^5$ ($R^3$, $R^4$, $R^5$ all represent hydrocarbon groups) and the like.

In the PSA composition disclosed herein, the amount of the crosslinking agent used can be suitably modified according to the type of crosslinking agent used. It is usually used in an amount of 0.0007 to 10 parts by weight or preferably 0.001 to 5 parts by weight, relative to 100 parts by weight of the acrylic polymer (A). The use of the crosslinking agent in these ranges may lead to formation of a PSA layer having excellent heat resistance and anchoring ability.

<Tackifier>

The PSA composition may further comprise a tackifier. As the tackifier, for example, can be used one, two or more species selected from various tackifier resins such as rosin-based resins, rosin-derivative resins, petroleum-based resins, terpene-based resins, phenol-based resins, ketone-based resins, and so on.

As the tackifier, from the standpoint of increasing the cohesive strength under a high temperature environment, for example, a preferable tackifier has a softening point of 100 °C or above, or more preferably of 140 °C or above. Examples of tackifiers having such softening points include "SUPER ESTER E-865; softening point 160 °C", "SUPER ESTER E-865NT; softening point 160 °C", "SUPER ESTER E-650NT; softening point 160 °C", "TAMANOL E-100; softening point 150 °C", "TAMANOL E-200; softening point 150 °C", "TAMANOL 803L; softening point 145 °C to 160 °C", "PENSEL D-160; softening point 150 °C", and "PENSEL KK; softening point 165 °C" available from Arakawa Chemical Industries, Ltd.; "YS POLYSTER S-series", "YS POLYSTER T-series", and "MIGHTY ACE G-series" available from Yasuhara Chemical Co., Ltd.; and the like while not limited to these. These tackifiers are used singly or in combination. With use of a tackifier having a softening point of about 100 °C or above, for example, higher levels of cohesive strength and other properties (peel strength, edge-peel resistance, etc.) can be obtained.

The amount of the tackifier added can be, for instance, 50 parts by weight or less relative to 100 parts by weight of the acrylic polymer (A) based on non-volatiles (solid contents). It is usually suitable that the amount added is 40 parts by weight or less. Although the lower limit of the tackifier content is not particularly limited, in usual, when it is I part by weight or greater relative to 100 parts by weight of the acrylic polymer (A), good results can be obtained.

In a preferable embodiment of the PSA composition disclosed herein, the amount of the tackifier added (contained) is 5 to 40 parts by weight (typically 5 to 30 parts by weight, e.g. 15 to 30 parts by weight) relative to 100 parts by weight of the acrylic polymer (A) based on solid contents.

<Heat-Foaming Agent>

The heat-foaming agent is not particularly limited. For example, a suitable known heat-foaming agent can be selected and used while a microencapsulated foaming agent can be preferably used. Examples of such a microencapsulated foaming agent include microspheres (which may be referred to as "thermally expandable microspheres") in which a substance that readily undergoes vaporization with heat, such as isobutane, propane, pentane or the like, is encapsulated in a flexible shell.

In usual, shells of thermally expandable microspheres are often formed of a thermoplastic substance, thermally melting substance, a substance that bursts by thermal expansion, or the like. Examples of the substance constituting shells of thermally expandable microspheres include a vinylidene chloride-acrylonitrile copolymer, polyvinyl alcohol, polyvinyl butyral, polymethyl methacrylate, polyacrylonitrile, polyvinylidene chloride, polysulfone and the like. The thermally expandable microsphere can be produced by a commonly used method, such as a coacervation method, interfacial polymerization method, and other like methods.

As the thermally expandable microspheres, commercial products may also be used. There are no particular limitations to such commercial heat-foaming agents. Examples include trade names "MATSUMOTO MICROSPHERE F-30", "MATSUMOTO MICROSPHERE F-50", "MATSUMOTO MICROSPHERE F-80SD" and "MATSUMOTO MICROSPHERE F-85" (available from Matsumoto Yushi-Seiyaku Co., Ltd.); trade name "EXTANCEL DU" (available from Akzo Nobel Surface Chemistry AB) and the like.

In view of the dispersibility and capability to form thin layers, thermally expandable microspheres generally have an average particle diameter of about 1 $\mu$m to 80 $\mu$m, or preferably about 3 $\mu$m to 50 $\mu$m.

To efficiently reduce the adhesive strength of a PSA-containing PSA layer by heating, a preferable type of thermally expandable microspheres has suitable strength to withstand a volume increase of 5 times or greater, particularly 10 times or greater, without bursting. When a type of thermally expandable microspheres that burst by a smaller volume increase is used, or when an unmicroencapsulated thermally expanding agent is used, the surface area of adhesion between the heat-foaming agent-containing PSA layer and the adherend will not be sufficiently reduced, making it difficult to obtain good removability.

While the amount of the heat-foaming agent used may vary depending on the type, it is, for instance, 10 to 200 parts by weight, preferably 20 to 125 parts by weight, or more preferably about 25 to 100 parts by weight, relative to 100 parts by weight of the acrylic polymer (A). When it is less than 10 parts by weight, the effect of reducing the adhesive strength by heating tends to be insufficient. When it exceeds 200 parts by weight, the heat-foaming agent-containing PSA layer is likely to undergo cohesive failure or interfacial failure with the porous material layer.

Examples of other usable heat-foaming agents include various kinds of inorganic foaming agents and organic foaming agents. Typical examples of inorganic foaming agents include water, ammonium carbonate, ammonium bicarbonate, sodium bicarbonate, ammonium nitrite, sodium borohydride, azides and the like. Typical examples of organic foaming agents include chlorofluoroalkanes such as trichloromonofluoromethane, dichloromonofluoromethane, etc.; azo-based compounds such as azobisisobutylonitrile, azodicarbonamide, barium azodicarboxylate, etc.; hydrazine-based compounds such as para-toluenesulfonylhydrazide, diphenylsulfone-3,3'-disulfonylhydrazide, 4,4'-oxybis(benzensulfonylhydrazide), allylbis(sulfonylhydrazide), etc.; semicarbazides such as p-toluenesulfonyl semicarbazide, 4,4'-oxybis(benzenesulfonyl semicarbazide), etc.; triazole-based compounds such as 5-morpholyl-1,2,3,4-thiatriazole, etc.; N-nitroso-based compounds such as N,N'-dinitrosopentamethylene tetramine, N,N'-dimethyl-N.N'-dinitrosoterephthalamide, etc.; and the like. Heat-foaming agents can be used singly or in combination of two or more species. A foaming-aid agent may be included as necessary.

<Other Components>

To the PSA composition, it is possible to further add, as necessary, additives that are usually added to PSA such as viscosity-adjusting agents, release-adjusting agents, plasticizers, softeners, fillers, colorants (pigments and dyes, etc.), antioxidants, surfactants, leveling agents, anti-foaming agents, and so on. The amounts of these additives added are not particularly limited and can be suitably selected.

<Preparation of Heat-Foaming Agent-Containing PSA Layer>

The heat-foaming agent-containing PSA layer can be formed with the PSA composition described above, for instance, by a known method such as applying the PSA composition onto a release film, etc., followed by allowing the solvent or water to dry, and so on.

(II) Porous Material Layer

The porous material layer is a porous layer. Pores (bubbles) in the porous material layer may be formed successively or independently (separately). In other words, the porous material layer may contain bubbles in any of the forms of successive bubbles, independent bubbles, and a combination of these.

In the porous material layer, the porosity (ratio of bubbles) is not particularly limited. For example, it is 3 to 99 % by volume (preferably 10 to 97 % by volume, or more preferably 30 to 80 % by volume) relative to the total volume of the porous material layer.

The method for determining the porosity of the porous material layer is not particularly limited. While any method can be used, such as computing from the density, computing by gas injection, computing from the air permeability and so on, a method that computes it from the density is preferable.

It is noted that the porosity values described above refer to values computed from the density of the porous material layer. The method that computes the porosity of the porous material layer from the density can be defined more specifically by the next equation: porosity (P) = [(true density) - (bulk density)]/(true density). The bulk density is calculated by: bulk density = weight/volume, upon determination of the volume and the weight. The true density is measured based on, for instance, JIS R7212, etc.

The thickness of the porous material layer is not particularly limited while it is usually 100 $\mu$m or larger (e.g. 100 $\mu$m to 10000 $\mu$m, preferably 200 $\mu$m or larger (e.g. 200 $\mu$m to 8000 $\mu$m), more preferably 300 $\mu$m or larger (e.g. 300 $\mu$m to 5000 $\mu$m)). The porous material layer may have a single layer form or a layered form.

More specific examples of the porous material layer include a fiber-based porous material layer formed with a fiber material, a resin-based porous material layer formed by forming bubbles with a resin material, a paper-based porous material layer formed with a paper material, and the like. The porous material layer may have a single-layer structure or a multi-layer structure.

<Fiber-Based Porous Material Layer>

The fiber-based porous material layer is not particularly limited as long as it is a porous layer formed with a fiber material. Examples include cloth (woven fabric) layers, non-woven fabric layers and the like, among which non-woven fabric layers are preferable. The fiber material used in the fiber-based porous material layer is not particularly limited, and it can be any of natural fibers, semi-synthetic fibers and synthetic fibers. Examples of fiber materials include cotton fibers, rayon fibers, polyamide-based fibers, polyester-based fibers (polyethylene terephthalate-based fibers, etc.), polyacrylonitrile-based fibers, acrylic fibers, polyvinyl alcohol fibers, polyolefinic fibers (polyethylene-based fibers, polypropylene-based fibers, etc.), polyimide-based fibers, polyurethane-based fibers, carbon fibers (carbon-based fibers), silicone-based fibers, fluorine-based fibers and the like. Fiber materials can be used singly or in combination of two or more species.

<Paper-Based Porous Material Layer>

The paper-based porous material layer is not particularly limited as long as it is a porous layer formed with a paper material. Examples of the paper material used in the paper-based porous material layer include Japanese paper materials, Western paper materials, high-quality paper materials, glassine paper materials, kraft paper materials, Clupak paper materials, crepe paper materials and the like. Paper materials can be used singly or in combination of two or more species.

As the porous material layer, a fiber-based porous material layer (non-woven fabric layer, etc.) formed with a fiber material and a resin-based porous material layer (foam layer, etc.) formed by forming bubbles with a resin material are preferable, among which the fiber-based porous material layer (especially a non-woven fabric layer) is particularly preferable.

<Resin-Based Porous Material Layer>

The resin-based porous material layer is not particularly limited as long as it is a porous layer (foam layer, etc.) formed by forming bubbles (foaming, etc.) with a resin material.

The resin-based porous material layer may have a constitution where porous bodies (foam bodies, etc.) are dispersed in a resin.

The resin material used in the resin-based porous material layer is not particularly limited, with examples including acrylic resins, polyolefinic resins (polyethylene, polypropylene, ethylene-propylene copolymers, ethylene-vinyl acetate copolymers, etc.), polyester-based resins (polyethylene terephthalate, polyethylene naphthalate, polybutylene terephthalate, polybutylene naphthalate, etc.), polyimide, urethane-based resins, acryl-urethane copolymers, vinyl acetate-based resins, polyvinyl chloride, etc. Resin materials may be used singly or in combination of two or more species. Among these, acrylic resins, polyolefinic resins and urethane-based resins are preferable while viscoelastic bodies formed from these resins are more preferable.

With respect to the resin-based porous material layer, examples of the bubble-forming method to form bubbles with a resin material include known bubble-forming methods such as a bubble-forming method by mechanical agitation, a bubble-forming method using a reaction product gas, a bubble-forming method (foaming method) using a foaming agent, a bubble-forming method removing soluble substances, a bubble-forming method by spraying, a bubble-forming method where syntactic foam is formed, a bubble-forming method by sintering and so on, with the foaming method being particularly preferable. Accordingly, as the resin-based porous material layer, a foam layer is most preferable. When forming a resin-based porous material layer by a foaming method, a foaming agent can be used. For the foaming agent, a suitable one can be selected among known foaming agents. Examples include thermally expandable microspheres, other organic foaming agents, inorganic foaming agents and so on.

In the resin-based porous material layer, the resin material may be crosslinked. For crosslinking of the resin material, a crosslinking agent can be used. The crosslinking agent can be suitably selected according to the type of resin material and so on. Examples include isocyanate-based crosslinking agents, epoxy-based crosslinking agents, melamine-based crosslinking agents, peroxide-based crosslinking agents as well as urea-based crosslinking agents, metal alkoxide-based crosslinking agents, metal chelate-based crosslinking agents, metal salt-based crosslinking agents, carbodiimide-based crosslinking agents, oxazoline-based crosslinking agents, aziridine-based crosslinking agents, amine-based crosslinking agents and the like.

<Formation Method>

A suitable method for forming the porous material layer can be selected among known formation methods, according to the type of porous material layer, etc. For example, when the porous material layer is fiber-based or paper-based, it can be formed by overlaying a piece of cloth, non-woven fabric or paper, etc., on a prescribed surface such as a non-porous substrate surface, etc. When the porous material layer is resin-based and the resin-based porous material has been formed by foaming with a resin material, it can be formed by applying a resin material composition comprising a foaming agent onto a prescribed surface such as a non-porous substrate surface, crosslinking or curing as necessary, followed by allowing the foaming agent to foam up.

The porous material layer preferably contains bubbles while being viscoelastic. With inclusion of bubbles in a viscoelastic material layer, a PSA sheet having the viscoelastic material layer may exhibit good bump absorptivity to an uneven surface of an adherend and high adhesiveness under normal conditions when attached to the adherend.

<Acrylic Viscoelastic Material>

As the resin-based porous material layer, an acrylic viscoelastic material layer is more preferable. The acrylic viscoelastic material layer comprises an acrylic polymer as the base polymer and exhibits viscoelasticity. Hereinafter, the acrylic polymer contained in the acrylic viscoelastic material layer may be referred to as an acrylic polymer (B).

[Acrylic Polymer (B)]

As the acrylic monomer constituting the acrylic polymer (B), for instance, can be used the various acrylic monomers (typically alkyl (meth)acrylates) listed earlier to possibly constitute the acrylic polymer (A).

The acrylic polymer (B) content in the acrylic viscoelastic material layer is, for instance, preferably 30 to 100 % by weight, or more preferably 50 to 90 % by weight.

As a monomer constituting the acrylic polymer (B), the aforementioned polar group-containing monomer possibly constituting the acrylic polymer (A) or other co-polymerizable monomer(s) can be used along with an acrylic monomer.

As the co-polimerizable monomer, carboxyl group-containing unsaturated monomers and hydroxyl group-containing unsaturated monomers are preferable, among which carboxyl group-containing monomers are preferable while acrylic acid is more preferably used. Among these copolymerizable monomers, a single species or a combination of two or more species is used.

The acrylic monomer content in the acrylic polymer (B) (typically, the acrylic monomer content in the monomer composition used for forming the acrylic polymer (B)) is not particularly limited while it is preferably 50 to 100 % by weight, more preferably 60 to 95 % by weight, or even more preferably 70 to 90 % by weight.

When the co-polymerizable monomer is copolymerized, the co-polymerizable monomer content in the acrylic polymer (B) is not particularly limited while it is preferably 0.01 to 50 % by weight, more preferably 0.1 to 30 % by weight, even more preferably 1 to 20 % by weight, or particularly preferably 3 to 10 % by weight.

[Polyfunctional (Meth)acrylates]

As a monomer constituting the acrylic polymer (B), a polyfunctional (meth)acrylate may be used, and the various polyfunctional (meth)acrylates exemplified in "(I) Heat-Foaming Agent-Containing PSA Layer" can be used.

The amount of the polyfunctional (meth)acrylate used is, for instance, 0.001 to 5 parts by weight, preferably 0.001 to 3 parts by weight, or more preferably 0.01 to 2 parts by weight, relative to 100 parts by weigh of all monomers constituting the acrylic polymer (B).

[Polymerization Initiator]

For the polymerization to obtain the acrylic polymer (B), various known polymerization initiators can be used without limitations. Especially, in view of possibly shortening the polymerization time, a photopolymerization initiator can be used preferably. More specifically, for example, various polymerization initiators disclosed in Japanese Patent Application Publication No. 2009-120807 can be used preferably.

[Fine Particles]

The acrylic viscoelastic material layer may comprise fine particles. Examples of the fine particles include particles of metals such as copper, nickel, aluminum, chromium, iron, stainless steel and the like as well as particles of oxides of these metals; particles of carbides such as silicon carbide, boron carbide, nitrogen carbide, etc.; particles of nitrides such as aluminum nitride, silicon nitride, boron nitride, etc.; ceramic particles typified by alumina and oxides of zirconium, etc.; inorganic fine particles such as calcium carbide, aluminum hydroxide, glass, silica, etc.; particles of natural materials such as shirasu volcanic ash, sand, etc.; particles of polymers such as polystyrene, polymethyl methacrylate, phenol resin, benzoguanamine resin, urea resin, silicon resin, nylon, polyester, polyurethane, polyethylene, polypropylene, polyamide, polyimide, etc.; and the like.

As the fine particles, hollow inorganic microspheres or hollow organic microspheres may be used as well. Specific examples of hollow inorganic microspheres include hollow balloons made of glass such as hollow glass balloons, etc.; hollow balloons made of metal compounds such as hollow alumina balloons, etc.; hollow balloons made of ceramics such as hollow ceramic balloons, etc.; and the like. Examples of hollow organic microspheres include hollow balloons made of resins such as hollow acrylic balloons, hollow vinylidene chloride balloons, etc.; and the like.

Examples of commercial hollow glass balloons include trade name "GLASS MICRO BALLOON" (available from Fuji Silysia Chemical Ltd.); trade names "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39", "CEL-STAR PZ-6000" (available from Tokai Kogyo Co. Ltd.); trade names "SILAX FINE BALLOON" (available from Fine Balloon KK) and the like.

As the fine particles, solid glass balloons can be used as well. Examples of commercial solid glass balloons include trade name "SUNSPHERE NP-100" (available from Asahi Glass Co., Ltd.); trade names "MICRO GLASS BEADS EMB-20", "GLASS BEADS EGB-210" (available from Potters-Ballotini Co., Ltd.), and the like.

Among the fine particles, from the stand point of the polymerization efficiency with active energy rays (particularly, ultraviolet rays) and the weight, etc., hollow inorganic fine particles are preferably used, with use of hollow glass balloons being more preferable. With the use of hollow glass balloons, the adhesive strength at higher temperatures can be increased without impairing other properties such as shear strength, holding power, etc. For the fine particles, solely one type or a combination of two or more types can be used. Surfaces of fine particles may be subjected to various surface treatments (e.g. treatments by a silicone-based compound or a fluorine-based compound, etc., to lower the surface energy).

The particle diameter (average particle diameter) of the fine particles is not particularly limited. For example, it can be selected from a range of 1 $\mu$m to 500 $\mu$m (preferably 5 $\mu$m to 200 $\mu$m, more preferably 10 $\mu$m to 100 $\mu$m, even more preferably 30 $\mu$m to 100 $\mu$m).

The specific gravity (true density) of the fine particles is not particularly limited. For example, it can be selected from a range of 0.01 g/cm$^3$ to 1.8 g/cm$^3$ (preferably 0.02 g/cm$^3$ to 1.5 g/cm$^3$). If the specific gravity of the fine particles is smaller than 0.01 g/cm$^3$, when the fine particles are added and mixed with a polymerizable composition, the fine particles will float to a greater extent, making it less likely for the fine particles to disperse uniformly; and furthermore, the strength may become of an issue and the fine particles may get broken. On the other hand, if the specific gravity of the fine particles is larger than 1.8 g/cm$^3$, the transmittance of active energy rays (particularly, UV rays) may decrease, lowering the efficiency of photo-curing reactions; and furthermore, the weight of the resulting PSA sheet may increase, lowering the workability. In particular, when hollow inorganic fine particles are used as the fine particles, the true density is preferably 0.1 g/cm$^3$ to 0.6 g/cm$^3$. When hollow organic fine particles are used, the true density is preferably 0.01 g/cm$^3$ to 0.05 g/cm$^3$,

The amount of the fine particles used is not particularly limited. For example, it can be selected so as to account for 5 to 50 % by bulk volume (% by volume), preferably 10 to 45 % by bulk volume, or more preferably 15 to 40 % by bulk volume, relative to the total volume of the acrylic viscoelastic material layer formed from the fine particle-containing polymerizable composition (typically a bubble-bearing, fine particle-containing polymerizable composition). When the fine particles are used in an amount less than 5 % by bulk volume, the effects by the addition of the fine particles may decrease. On the other hand, when the fine particles are used in an amount exceeding 50 % by bulk volume, the viscoelasticity of the acrylic viscoelastic material layer may decrease.

[Bubbles]

The acrylic viscoelastic material layer may contain bubbles. Examples of embodiments in which bubbles are formed include (1) an embodiment where bubbles are formed by forming the acrylic viscoelastic material layer with a bubble-bearing polymerizable composition that contains a gas component forming the bubbles (which may be referred to as a "bubble-forming gas") pre-mixed therein; (2) an embodiment where bubbles are formed by forming the acrylic viscoelastic material layer with a fine particle-containing PSA composition that comprises a foaming agent. In the art disclosed herein, the acrylic viscoelastic material layer usually contains bubbles formed in the embodiment (1). The foaming agent is not particularly limited. For example, it can be suitably selected among known foaming agents such as thermally expandable microspheres, etc.

The amount of bubbles that can be mixed in the acrylic viscoelastic material layer is not particularly limited, and can be suitably selected according to the intended purpose, etc. For example, of the total volume of the acrylic viscoelastic material layer, it is 3 to 99 % by volume, preferably 8 to 50 % by volume, or more preferably 13 to 30 % by volume.

While it is basically desirable that the bubbles mixed in the acrylic viscoelastic material layer are of an independent type, an independent type of bubbles and a successive type of bubbles may coexist.

While these bubbles usually have spherical (especially, true spherical) forms, they may have distorted spherical forms as well. The average bubble diameter (diameter) of the bubbles is not particularly limited. For example, it can be selected from a range of 1 $\mu$m to 1000 $\mu$m (preferably 10 $\mu$m to 500 $\mu$m, more preferably 30 $\mu$m to 300 $\mu$m).

The component included in the bubbles (gas component forming the bubbles; bubble-forming gas) is not particularly limited, and it is possible to use inert gases such as nitrogen, carbon dioxide, argon, etc., as well as various gaseous matters such as air, etc. When the polymerization reaction and so on are carried out after the bubble-forming gas is mixed in, it is important to use, as the bubble-forming gas, a gas species that does not inhibit the reactions. From the standpoint of being non-inhibitory to the reactions as well as cost issues, etc., nitrogen is preferable.

For mixing in fine bubbles consistently, a surfactant may be added to the polymerizable composition (typically, a bubble-bearing, fine particle-containing polymerizable composition). As such a surfactant, various known surfactants can be used, with examples including various surfactants disclosed in Japanese Patent Application Publication No. 2009-120807.

The method for mixing in bubbles is not particularly limited. For example, it is possible to employ a known bubble-mixing method disclosed in Japanese Patent Application Publication No. 2009-120807.

[Other Components]

The acrylic viscoelastic material layer may comprise suitable additives according to the intended purpose, in addition to the components described above. Examples of additives include thickening polymers, crosslinking agents (e.g. polyisocyanate-based crosslinking agents, silicone-based crosslinking agents, epoxy-based crosslinking agents, alkyl etherified melamine-based crosslinking agents, etc.), tackifiers (e.g. materials that are solid, semi-solid or liquid at ambient temperature, which are formed of a rosin derivative resin, polyterpene resin, petroleum resin, oil-soluble phenol resin, etc.), plasticizers, fillers, anti-aging agents, antioxidants, colorants (pigments, dyes, etc.), softeners, and so on.

<Preparation Method for Acrylic Viscoelastic Material Layer>

The preparation method for the acrylic viscoelastic material layer is not particularly limited. For example, a composition capable of forming the acrylic polymer (B) or a composition comprising a partially-polymerized product thereof is applied onto a suitable support such as a release film or a substrate, etc., to form a polymerizable composition layer, and the resulting layer is allowed to dry or cure (with heat or active energy rays) as necessary to form an acrylic viscoelastic material layer. As photopolymerization reactions are inhibited by oxygen in the air, for curing (photo-curing) with active energy rays, it is preferable to block oxygen by attaching a suitable support such as a release film or a substrate, etc., to the layer, or by photo-curing under a nitrogen atmosphere. The suitable support used for preparation of the acrylic viscoelastic material layer may be removed when fabricating a PSA sheet disclosed herein, or may be removed after fabricated, when using the PSA sheet.

(III) PSA Sheet

In a preferable embodiment, the PSA sheet disclosed herein comprises a heat-foaming agent-containing PSA layer on one or each face of a porous material layer. To protect the adhesive face of the PSA layer, it may have a release film (separator) on the PSA layer. As long as the effects by the present invention are not impaired, the PSA sheet may comprise an intermediate layer, a primer layer, etc.

Examples of intermediate layers include one, two or more intermediate layers provided between the porous material layer and the heat-foaming agent-containing PSA layer. Examples of these intermediate layers include a release agent coating layer to provide removability, a primer coating layer to obtain tighter lamination, a layer to provide good deformability, a layer to increase the bonding area, a layer to increase the adhesive strength to an adherend, a layer to make it well conformable to an adherend surface structure, a layer to increase the effect by heating to reduce the adhesive strength, a layer to increase the removability after heated, and so on.

The PSA sheet disclosed herein may be in the form of a double-faced PSA sheet of which both faces are adhesive, or in the form of a single-faced PSA sheet of which only one face is adhesive. When the PSA sheet disclosed herein is in the double-faced PSA sheet form, the adhesive faces may be provided only by heat-foaming agent-containing PSA layers, or one adhesive face may be provided by a heat-foaming agent-containing PSA layer while the other adhesive face may be provided by a PSA layer free of a heat-foaming agent (which may be referred to as a "heat-foaming agent-free PSA layer"). The heat-foaming agent-free PSA layer can be formed, for instance, by a known PSA layer-forming method, using a known PSA (e.g. acrylic PSA, rubber-based PSA, vinyl alkyl ether-based PSA, silicone-based PSA, polyester-based PSA, polyamide-based PSA, urethane-based PSA, fluorine-based PSA, epoxy-based PSA, etc.). The thickness of the heat-foaming agent-free PSA layer is not particularly limited, and can be suitably selected according to the purpose and usage, etc.

When the porous material layer is adhesive, it may have a double-faced PSA sheet form in which the heat-foaming agent-containing PSA layer is formed only on one face of the porous material layer.

The PSA sheet disclosed herein may be formed in a wound roll, or may be formed as layered sheets. With respect to the PSA sheet in a state or form of a wound roll, the adhesive face(s) may be protected with a release film, or with a release-treated layer (treated back layer) formed on the other face of the support. Examples of the release treatment agent (release agent) used for forming the release-treated layer (treated back layer) on the face of the support include silicone-based release agents and long chain alkyl-based release agents, etc.

With respect to the adhesive strength under normal conditions, the PSA sheet has a 180° peel strength (180° peel adhesive strength, adherend: polycarbonate plate, based on JIS Z0237: testing methods of pressure-sensitive adhesive tapes and sheets) of 10 N/20mm or greater (e.g. 10 N/20mm to 100 N/20mm), preferably 11 N/20mm or greater (e.g. 11 N/20mm to 90 N/20mm), or more preferably 12 N/20mm or greater (12 N/20mm to 80 N/20mm). With respect to the adhesive strength of the PSA sheet after heated, it has a 180° peel strength (180° peel adhesive strength, adherend: polycarbonate plate, based on JIS Z0237: testing methods of pressure-sensitive adhesive tapes and sheets) of 10 N/20mm or lower (e.g. 0 to 10 N/20mm), preferably 9 N/20mm or lower (e.g. 0 to 9 N/20mm), or more preferably 8 N/20mm or lower (e.g. 0 to 8 N/20mm).

The adhesive strength of the PSA sheet under normal conditions can be adjusted by suitably selecting the composition and thickness of the heat-foaming agent-containing PSA layer, or the composition and thickness of the porous material layer, etc.

<Intended Purposes>

Because the heat-foaming agent-containing PSA layer foams up by heating, when the PSA sheet disclosed herein is heated after adhered to an adherend, the adhesive strength to the adherend will decrease. Accordingly, the PSA sheet disclosed herein is used as a PSA sheet that can be easily removed from adherends.

The PSA sheet disclosed herein exhibits good bump absorptivity particularly with respect to a bump at most as high as 50 % (more preferably larger than 0 %, but 40 % or smaller) of the thickness of the porous material layer.

The adherend on which the PSA sheet is used is not particularly limited, and adherends of various shapes and materials can be used. Examples of materials of the adherend include various types of resin such as polycarbonate, polypropylene, polyester, polystyrene, phenol resin, epoxy resin, polyurethane, ABS, polyvinyl chloride, acrylic resin, etc.; various types of metal such as iron, aluminum, copper, nickel and alloys of these, etc.; stone-like materials such as mortar, concrete, etc.; wood materials; and the like.

More specifically, the PSA sheet disclosed herein is used for various purposes (e.g. attaching of components and so on) in various fields such as automobile components, machine components, electric appliance components, building materials, etc. Especially, it can be preferably used for fastening materials having uneven surfaces together, or for fixing these materials to materials having flat surfaces. When fastening materials having uneven surfaces together, the respective materials may be of the same type or different types.

Examples of the automobile components include various exterior components such as bumpers, fenders, emblems and so forth as well as interior components, etc. The PSA sheet disclosed herein can be used preferably on these automobile components as it allows for easy disassembly of automobiles as well as easy service and exchange of the various components.

Examples of the building materials include various construction materials that constitute pillars, walls, floorings, etc., as well as various interior materials and exterior materials such as veneers, hooks, clothes (wallpapers), carpets, partitions, curtain rails, etc. The PSA sheet disclosed herein can be used preferably on these building materials as it allows for easy disassembly and renovation of buildings as well as easy service and exchange of interior components.

<Heating Method>

Heating can be achieved, using suitable heating means such as hot plates, hot air drying ovens, near-infrared lamps, air dryers and so on. While the heating temperature should be equal to or above the foaming temperature of the foaming agent, it can be suitably selected depending on the surface state of the adherend, the type of heat-foaming agent, the heat resistance of the adherend, etc., the heating method (heat capacity, heating means, etc.) and so on. Generally, the heating is performed at a temperature of 100 °C to 250 °C for 5 seconds to 90 seconds (hot plates, etc.) or for 5 minutes to 15 minutes (hot air drying ovens, etc.). Under such conditions, the heat-foaming agent in the heat-foaming agent-containing PSA layer will usually expand and/or foam up to cause the foaming agent-containing PSA layer to expansively deform and develop uneven surfaces, whereby the adhesive strength will decrease or be lost. As the heat source, infrared lamps or heated water may be used as well.

As for other heating means, it is possible to employ a method where a heating element layer or the like may be included in the constitution of the PSA sheet so as to be heated up to the foaming temperature by a voltage applied to the heating element layer.

<Production Method for PSA Sheet>

The PSA sheet may be produced, for instance, by a known method disclosed in Japanese Patent Application Publication No. 2009-120807. More specifically, it can be produced by transferring and layering a heat-foaming agent-containing PSA layer prepared separately onto a porous material layer, or by applying a PSA composition comprising an acrylic polymer and a heat-foaming agent to a porous material layer followed by drying.

[Examples]

The present inventions are described more specifically with Examples and Comparative Examples given below. The present inventions are not limited to the following Examples and Comparative Examples by any means. In the following description, "parts" and "%" are based on the weight unless otherwise specified.

In the following description, release film A refers to a polyester film (trade name "MRN-3 8" available from Mitsubishi Plastics, Inc.) having a face treated with a silicone-based release agent while release film B refers to a polyester film (trade name "MRF-38" available from Mitsubishi Plastics, Inc.) having a face treated with a silicone-based release agent.

<Fabrication of PSA Sheet>

[Example 1]

To a four-neck flask, were placed 100 parts of a monomer mixture consisting of 70 parts of 2-ethylhexyl acrylate, 20 parts ofN-vinylcaprolactam and 10 parts of isobornyl acrylate; 0.05 part of 1-hydroxy-cyclohexyl-phenyl-ketone (trade name "IRGACURE 184" available from BASF Japan, Ltd.) and 0.05 part of 2,2-dimethoxy-1,2-diphenylethane-1-on (trade name "IRGACURE 651" available from BASF Japan, Ltd.) as photopolymerization initiators. Under a nitrogen atmosphere, the reaction mixture was irradiated with UV rays to a viscosity of about 15 Pa·s (BH viscometer, No. 5 rotor, 10 rpm, 30 °C) and photopolymerized to obtain a partially-polymerized monomer syrup (a partially-polymerized product of the monomer mixture). The partially-polymerized monomer syrup had a conversion of 5.9 %.

To 100 parts of the partially-polymerized monomer syrup, were added 30 parts of thermally expandable fine particles (trade name "MATSUMOTO MICROSPHERE F-80SD" available from Matsumono Yushi-Seiyaku Co., Ltd.) and 0.04 part of HDDA (1,6-hexanediol diacrylate) as a polyfunctional (meth)acrylate, and mixed uniformly to obtain a thermally expandable fine particle-containing composition A.

To the release-treated face of a release film B, the thermally expandable fine particle-containing composition A was applied to a thickness of 50 $\mu$m to form a composition layer, which was then covered with the release-treated face of a release film A to obtain a sheet having the thermally expandable fine particle-containing composition A between two release films. The resulting sheet was irradiated with UV rays at an irradiance of 4 mW/cm$^2$ and a UV fluence of 1200 mJ/cm$^2$ to photocatalytically cure the thermally expandable fine particle-containing composition A to obtain a laminate sheet (A) constituted with release film B/heat-foaming agent-containing PSA layer A/release film A.

[Example 2]

From the laminate sheet (A) obtained in Example 1, the release film A was removed, and the exposed heat-foaming agent-containing PSA layer A was adhered to a porous material layer (acrylic viscoelastic material layer) to obtain a laminate sheet (B) constituted with release film B/heat-foaming agent-containing PSA layer A/porous material layer/release film. For the porous material layer, a 1200 $\mu$m thick bubble-bearing, double-faced acrylic PSA tape (trade name "HYPERJOINT H9012" available from Nitto Denko Corporation) was used.

It is noted that the bubble-bearing, double-faced acrylic PSA tape (trade name "HYPERJOINT H9012" available from Nitto Denko Corporation) contains 9.5 % of hollow glass fine particles having an average particle diameter of 63 $\mu$m and 20 % by volume of bubbles.

[Example 3]

To a reaction vessel equipped with a stirrer, a thermometer, a reflux condenser, an addition funnel and a nitrogen inlet, were placed distilled water and 0.1 part of sodium polyoxyethylene alkyl ether sulfoxide (available from Kao Corporation, trade name "LATEMULE E-118B"). Under a nitrogen flow, the reaction mixture was stirred at 60 °C for 1.5 hours and purged with nitrogen.

To the reaction vessel, was added 0.1 part of 2,2'-azobis[N-(2-carboxyethyl)-2-methylpropionamidine]hydrate (available from Wako Pure Chemical Industries, Ltd., trade name "VA-057") as a polymerization initiator. While the system was maintained at 60 °C, an monomer emulsion was gradually added over 4 hours to carry out emulsion polymerization reaction. For the monomer emulsion, was used an emulsion obtained by adding to distilled water: 85.03 parts of 2-ethylhexyl acrylate, 13.13 parts of methyl acrylate, 1.08 parts of acrylic acid, 0.76 part of methacrylic acid, 0.020 part of 3-methacryloxypropyltrimethoxysilane (trade name "KBM-503" available from Shin-Etsu Chemical Co., Ltd.), 0.033 part of dodecanethiol as a chain transfer agent and 1.9 parts of the aforementioned emulsifier.

After completion of addition of the monomer emulsion, the reaction mixture was maintained at 60 °C for 3 hours for further curing, and then the heating was stopped. Subsequently, to 100 parts of monomers, 0.62 part of 10 % hydrogen peroxide water was added. Then, after next five minutes, 0.15 part of ascorbic acid was added to 100 parts of monomers. The resultant was cooled to room temperature. 10 % ammonia water was then added to a pH of 7.2 to obtain an acrylic polymer emulsion having an approximately 51.6 % solid content.

The resulting emulsion had an average particle diameter of about 209 nm. The acrylic polymer constituted with the emulsion had a Tg of -60.22 °C and a Mw of $48.4 \times 10^4$, a gel fraction of 50.1 % and a conversion of about 99.8 %.

To the resulting emulsion, were added 10 parts of a rosin-based tackifier (trade name "SUPER ESTER NS-100H"available from Arakawa Chemical Industries, Ltd., softening point 100 °C) and 30 parts of thermally expandable fine particles (trade name "MATSUMOTO MICROSPHERE F-80SD" available from Matsumoto Yushi-Seiyaku Co., Ltd.) and mixed uniformly to obtain a thermally expandable fine particle-containing composition B.

To the release-treated face of a release film B, the thermally expandable fine particle-containing composition B was applied, allowed to dry at 90 °C for 2 minutes to prepare a 50 μm thick heat-foaming agent-containing PSA layer.

Subsequently, the heat-foaming agent-containing PSA layer was adhered to a porous material layer (acrylic viscoelastic material layer) to obtain a laminate sheet constituted with release film B/heat-foaming agent-containing PSA layer B/porous material layer/release film. For the porous material layer, a 1200 μm thick bubble-bearing, double-faced acrylic PSA tape (trade name "HYPERJOINT H9012" available from Nitto Denko Corporation) was used.

[Example 4]

To a three-neck flask, were placed 3 parts of acrylic acid, 5 parts of vinyl acetate, 93 parts of butyl acrylate and 200 parts of toluene as the polymerization solvent. The mixture was stirred for two hours under a nitrogen flow. Oxygen was thus removed from the polymerization system, and 0.15 part of AIBN (2,2'-azobisisobutylonitrile) was then added. The reaction mixture was heated to 70 °C and polymerization was carried out for 6 hours. The resulting polymer had a Mw of $40 \times 10^4$.

To the polymer solution, relative to 100 parts of the solid content, were added 5 parts of a crosslinking agent (trade name "CORONATE L" available from Nippon Polyurethane Industry Co., Ltd.) and 30 parts of a thermally expandable fine particles (trade name "MATSUMOTO MICROSPHERE F-80SD" available from Matsumoto Yushi-Seiyaku Co., Ltd.) and mixed uniformly to obtain a thermally expandable fine particle-containing composition C.

To the release-treated face of a release film B, the thermally expandable fine particle-containing composition C was applied and allowed to dry at 90 °C for 2 minutes to prepare a 50 μm thick heat-foaming agent-containing PSA layer C.

Subsequently, the heat-foaming agent-containing PSA layer C was adhered to a porous material layer (acrylic viscoelastic material layer) to obtain a laminate sheet constituted with release film B/heat-foaming agent-containing PSA layer C/porous material layer/release film. For the porous material layer, was used a 1200 μm thick bubble-bearing, double-faced acrylic PSA tape (trade name "HYPERJOINT H9012" available from Nitto Denko Corporation).

[Example 5]

In the same manner as Example 3 except that in place of the porous material layer (trade name "HYPERJOINT H9012" available from Nitto Denko Corporation), a double-faced acrylic PSA tape (trade name "No. 5000E" available from Nitto Denko Corporation) free of both bubbles and fine particles was used as a non-porous material layer, was obtained a laminate sheet constituted with release film B/heat-foaming agent-containing PSA layer C/non-porous material layer/release film.

[Example 6]

For comparative evaluation, a sheet consisting of a 1200 μm thick bubble-bearing, double-faced acrylic PSA tape (trade name "HYPERJOINT H9012" available from Nitto Denko Corporation), being a porous material layer, was used.

<Evaluation Methods>

The resulting respective sheets were evaluated by the following methods. The evaluation results are shown in Table 1.

(1) Initial Adhesive Strength

(Preparation of Test Specimens)

From each resulting sheet, the release film on the porous material layer side was removed. To the exposed adhesive face, a 50 μm thick polyethylene terephthalate film (trade name "LUMIRROR S10 #50" available from Toray Industries, Inc.) was adhered with a laminator roll. The resultant was cut to 20 mm wide strips to prepare test specimens.

(Measurement of Initial Adhesive Strength)

Under an atmosphere at 23 °C, a test specimen was pressure-bonded to a polycarbonate plate as the adherend with a 2 kg roller moved back and forth once, and aged at 23 °C for 30 minutes. Under the atmosphere at 23 °C, using a tensile tester (trade name "TG-1kN" available from Minebea Co., Ltd.), the specimen was peeled in the 180° direction at a tensile speed of 300 mm/min to measure the 180° peel strength (initial adhesive strength in N/20mm-widtth) as the adhesive strength under normal conditions.

(2) Adhesive Strength after Heated

Test specimens were prepared in the same manner as in "(1) Initial Adhesive Strength". Under an atmosphere at 23 °C, a test specimen was pressure-bonded to a polycarbonate plate as the adherend with a 2 kg roller moved back and forth once, and aged at 23 °C for 30 minutes. Subsequently, the test specimen bonded on the adhered was placed in a hot air drying oven and heated at 150 °C for 10 minutes.

After heated, it was confirmed whether or not the test specimen peeled off the adherend due to the foaming of the heat-foaming agent by heating. When the specimen did not peel off and remained bonded, it was left under an atmosphere at 23 °C for two hours. Subsequently, under an atmosphere at 23 °C, using a tensile tester (trade name "TG-1kN" available from Minebea Co., Ltd.), the sample was peeled in the 180° direction at a tensile speed of 300 mm/min to measure the 180° peel strength (initial adhesive strength in N/20mm-widtth) as the adhesive strength after heated.

(3) Ball Tack

The tack of each heat-foaming agent-containing PSA layer was measured based on the inclined type ball tack test method (slope angle: 30°, 23 °C, 65 % RH) specified in JIS Z0237. More specifically, each sheet was placed at a designated location on an inclined type ball tack tester (rolling ball device) with a slope inclined at a 30° angle, with the heat-foaming agent-containing PSA layer face up. Subsequently, a polyethylene terephthalate film (25 $\mu$m thick poly-ethylene terephthalate film as specified in JIS C2318) for an approach was adhered to a prescribed area (so that the length of the adhesive face is to be 100 mm) on the adhesive face of the sheet. Balls were placed so that the center of each ball was located at the start line selected in accordance with the size of the ball, the start line being set to have an approach length of 100 mm. Each ball was allowed to roll, and the largest ball was determined among the balls that came to stop on the adhesive face covering the measurement range. With respect to a total of three balls including the largest ball just determined and balls that are one size larger and one size smaller, in the same manner as described above, rolling was performed once for each ball, totaling to 3 rolling runs, to confirm that the ball just determined as the largest ball was indeed the largest ball that met the measurement specifications. The tack was hereby measured.

(4) Bump Absorptivity

The bump absorptivity was evaluated as good (G) when the wet area ratio determined by the measurement method for wet area ratio described in paragraph [0227], Japanese Patent Application Publication No. 2009-120807, was 40 % or greater, and evaluated as poor (P) when it was below 40 %.

[Table 1]

Table 1

| | Ex. 1 | Ex. 2 | Ex. 3 | Ex. 4 | Ex. 5 | Ex. 6 |
|---|---|---|---|---|---|---|
| Constitution | | | | | | |
|   Heat-foaming agent-containing PSA layer | A | A | B | C | B | - |
|   Porous material layer | - | Porous | Porous | Porous | Non-porous | Porous |
| Test results | | | | | | |
|   Bump absorptivity (bump height: 50 $\mu$m) | P | G | G | G | P | G |
|   Initial adhesive strength (N/20mm) | 16 | 53 | 15 | 14 | 19 | 32 |
|   Adhesive strength after heated (N/20mm) | Natural peel-off | Natural peel-off | Natural peel-off | Natural peel-off | Natural peel-off | - |
|   Ball tack | 3 | 3 | 6 | 23 | 6 | N/A |

As shown in Table 1, with respect to Examples 3 and 4 each comprising a porous material layer and a heat-foaming agent-containing PSA layer comprising an acrylic polymer obtained by solution polymerization or emulsion polymerization, even though natural peel-off occurred when heated, the ball tack values were higher by two times or more than that of Example 2 comprising an acrylic polymer obtained by UV polymerization. Based on these results, it can be said that when a PSA sheet comprising a porous material layer and a heat-foaming agent-containing PSA layer that comprises an acrylic polymer obtained by solution polymerization or emulsion polymerization is adhered to an adherend having an uneven surface, it can be attached well to the adherend without the need for a force applied continuously for a certain period of time.

Examples 3 and 4 were also found to have greater bump absorptivity as compared to Examples 1 and 5 that did not include porous material layers.

The present invention is not limited to the respective embodiments described above and can be modified in a variety of ways within the ranges described in the claims. The technical scope of the present invention encompasses embodiments obtained by suitably combining technical means disclosed respectively in the different embodiments.

**Claims**

1. A pressure-sensitive adhesive sheet comprising a porous material layer and a heat-foaming agent-containing pressure-sensitive adhesive layer, wherein:

   the heat-foaming agent-containing pressure-sensitive adhesive layer comprises an acrylic polymer, and
   the acrylic polymer is **characterized by** being obtained by solution polymerization or emulsion polymerization.

2. The pressure-sensitive adhesive sheet according to Claim 1, wherein the porous material layer has a thickness of 100 $\mu$m to 10000 $\mu$m.

3. The pressure-sensitive adhesive sheet according to Claim 1 or 2, wherein the porous material layer contains bubbles at 3 to 99 % by volume relative to the total volume of the porous material layer.

## EUROPEAN SEARCH REPORT

Application Number

EP 14 16 5785

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/250446 A1 (HIGUCHI NAOAKI [JP] ET AL) 13 October 2011 (2011-10-13) * paragraphs [0020], [0051], [0065], [0105] - [0111]; claims 1, 5, 7; figure 1 * | 1-3 | INV. B32B5/18 B32B27/06 B32B27/10 B32B27/12 C08F2/04 C08F2/22 C09J7/02 C09J133/10 C09J133/08 |
| Y | US 2012/034407 A1 (YAMANAKA EIJI [JP] ET AL) 9 February 2012 (2012-02-09) * paragraphs [0014], [0076], [0077], [0142], [0143], [0159], [0168]; claims 1, 9, 15; example 1 * | 1 | |
| Y | US 2010/233467 A1 (NIWA MASAHITO [JP] ET AL) 16 September 2010 (2010-09-16) * paragraphs [0009], [0038], [0039], [0095], [0097], [0132], [0133], [0154], [0166], [0167]; claim 1; examples 3, 6 * | 1 | |
| Y | US 2011/262737 A1 (FUNG DEIN-RUN [TW] ET AL) 27 October 2011 (2011-10-27) * embodiment 1; paragraphs [0007], [0015], [0022], [0050]; figure 1 * | 1 | TECHNICAL FIELDS SEARCHED (IPC) B32B C08F C09J |

The present search report has been drawn up for all claims

| Place of search | Date of completion of the search | Examiner |
|---|---|---|
| Munich | 28 August 2014 | Clement, Silvia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 5785

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2014

| Patent document cited in search report | | | Publication date | Patent family member(s) | | | Publication date |
|---|---|---|---|---|---|---|---|
| US 2011250446 | A1 | | 13-10-2011 | CN | 102220096 | A | 19-10-2011 |
| | | | | EP | 2395063 | A2 | 14-12-2011 |
| | | | | JP | 2011231319 | A | 17-11-2011 |
| | | | | KR | 20110113584 | A | 17-10-2011 |
| | | | | US | 2011250446 | A1 | 13-10-2011 |
| US 2012034407 | A1 | | 09-02-2012 | CN | 101835862 | A | 15-09-2010 |
| | | | | EP | 2204425 | A1 | 07-07-2010 |
| | | | | JP | 5171425 | B2 | 27-03-2013 |
| | | | | JP | 2009120808 | A | 04-06-2009 |
| | | | | US | 2012034407 | A1 | 09-02-2012 |
| US 2010233467 | A1 | | 16-09-2010 | CN | 101831252 | A | 15-09-2010 |
| | | | | EP | 2228418 | A1 | 15-09-2010 |
| | | | | JP | 5294931 | B2 | 18-09-2013 |
| | | | | JP | 2010209263 | A | 24-09-2010 |
| | | | | US | 2010233467 | A1 | 16-09-2010 |
| US 2011262737 | A1 | | 27-10-2011 | TW | 201137075 | A | 01-11-2011 |
| | | | | US | 2011262737 | A1 | 27-10-2011 |

EPO FORM P0459

For more details about this annex : see Official Journal of the European Patent Office, No. 12/82

**EP 2 796 285 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009120807 A

- JP 2009001673 A
- JP 2007063536 A